# EUROPÄISCHE PATENTSCHRIFT

(11) **EP 0 820 862 B1**
(45) Veröffentlichungstag und Bekanntmachung des Hinweises auf die Patenterteilung: **25.04.2001**
(21) Anmeldenummer: 97104021.7
(22) Anmeldetag: 11.03.1997
(51) Int. Cl.: B41F 13/03, B65H 20/16

(54) **Vorrichtung zum Bahntransport und Bahneinzug mit einer elektrischen Antriebseinrichtung**
Apparatus for transporting and threading-in of webs having an electric drive
Dispositif de transport et d'enfilage de bandes comprenant un entraînement électrique

(30) Priorität: 25.07.1996 DE 19629716
(43) Veröffentlichungstag der Anmeldung: 28.01.1998
(73) Patentinhaber: EMO Elektromotorenwerk Kamenz GmbH, 01917 Kamenz (DE)
(72) Erfinder: Berger, Dietmar, 01169 Dresden (DE); Strohmer, Waldemar, 90471 Nürnberg (DE); Nimz, Detlef, 02977 Hoyerswerda (DE); Kreisfeld, Peter, Dr., 90518 Altdorf/Weinhof (DE)
(74) Vertreter: Götz, Georg, Dipl.-Ing.

(56) Entgegenhaltungen:
- EP-A- 0 544 088
- DD-A- 263 262
- DE-A- 2 021 246
- DE-A- 2 501 963
- DE-A- 4 004 221
- DE-A- 4 202 713
- DE-C- 4 328 057
- DE-C- 19 510 281
- US-A- 5 947 361

## Beschreibung

Die Erfindung betrifft eine Vorrichtung zum Transport und zur Förderung von Stoffen und Stückgütern sowie einer Papierbahn in eine Druckmaschine, mit mindestens einem zum Eingriff mit dem Stoff oder Stückgut oder mit der Papierbahn ausgebildeten Förderelement, einer Führungsschiene, in und/oder längs welcher das oder die Förderelemente bewegbar sind, und einer das Förderelement erfassenden Antriebseinrichtung, um den Stoff, das Stückgut oder die Papierbahn über das Förderelement in und/oder durch die Maschine zu befördern.

Bei bekannten Papiereinzugsvorrichtungen etwa dieser Art wird mittels eines Mitnehmerhakens die Papierbahn in eine bestimmte Richtung befördert. Der Mitnehmerhaken ist an einer Kette befestigt, die mittels pneumatischem Antrieb in Förderrichtung entlang einer Führung bewegt wird. Ist der Einzugvorgang für die Papierbahn in die Druckmaschine beendet, wird der Mitnehmerhaken außer Eingriff mit der Papierbahn gebracht und samt seiner Zugkette manuell zurück zum Anfang des Einzugsbereichs getragen. Der erneute Eingriff mit der nächsten Papierbahn wird ebenfalls manuell durchgeführt. Aufgrund der pneumatischen Antriebsmittel läßt sich allerdings die Förderkraft nicht präzise genug steuern oder regeln; folglich besteht die Gefahr, daß die Papierbahn leicht reißt, was den Aufwand erneuten Einziehens erforderlich macht. Ein weiterer Nachteil besteht darin, daß der Mitnehmerhaken als Förderelement manuell ausgehakt und wieder zum Anfang des Einzugsbereichs zurückgetragen werden muß, was den Aufwand an menschlicher Arbeitskraft und -zeit erhöht. Zudem ist die mit dem Mitnehmerhaken verbundene Förderkette verhältnismäßig wartungsbedürftig. Beim Pneumatikantrieb ist das Medium "Luft" relativ teuer.

Ferner sind aus der DE-C-41 22 228, DE-PS 20 21 246, DD-A-263 262 und EP-A-0 425 741 Bahneinzugsvorrichtungen bekannt, bei denen das Antriebsprinzip auf mechanischem Form- und Reibschluß basiert. Deshalb und insbesondere angesichts ihrer zahlreichen beweglichen Teile weisen sie hohe Reibungsverluste und starken Verschleiß auf. Die große Anzahl beweglicher Teile führt zu einer aufwendigen und kostenträchtigen Konstruktion. Die Förderstationen bei der Vorrichtung nach der letztgenannten Fundstelle benötigen einen großen Platzbedarf. Schließlich besteht bei den Vorrichtungen nach den genannten Fundstellen die Gefahr, daß bereits durch eine geringfügige Verschmutzung der Führungsschienen bzw. der Zugeinrichtung Betriebsstörungen auftreten können.

Ein Greiferwagenantrieb für eine Druckmaschine ist aus DT 25 01 963 A1 bekannt. Bei diesem wird ein zu bedruckender Bogen in einen Greiferschluß auf horizontaler Bahn geführt. Der den Bogen führende Greiferwagen fungiert als elektrischer Anker in Wirkungsverbindung mit beidseitig in Seitenwänden von Druckwerken angeordneten Druckwerk- und Rückführ-Laufschienen, die als elektrischer Ständer arbeiten. Infolgedessen bildet jeder Greiferwagen in Verbindung mit den Ständer-Laufschienen und einer Steuereinrichtung einen elektrischen Linearmotor.

Schließlich ist in der am 03. Dez. 1997 nachveröffentlichten Patentanmeldung EP-A-0 810 089, entspricht der DE 196 21 507.2, eine Bahneinzugsvorrichtung für eine bahnförmiges Material verarbeitende Maschine, insbesondere eine Rollenrotations-Druckmaschine beschrieben, bei der eine schienengeführte Zugeinrichtung durch unmittelbare Einwirkung magnetischer Kräfte aufgrund eines elektrischen Linearantriebs angetrieben wird und die Bahn hinter sich herzieht. Die Zugeinrichtung bildet gleichsam den Läufer des elektrischen Linearantriebes, und die Führungsschiene für die Zugeinrichtung dessen Stator, wobei entlang der Führungsschiene elektrisch erregbare Spulen angeordnet sind.

Der Erfindung liegt die Aufgabe zugrunde, bei einer Einzugsvorrichtung der eingangs genannten Art mechanischen Verschleiß und Reibungsverluste zu vermeiden, den Aufwand für die Herstellung und die Konstruktion zu vermindern sowie die Betriebssicherheit und -zuverlässigkeit zu erhöhen.

Zur Lösung wird die im Anspruch 1 angegebene Einzugsvorrichtung vorgeschlagen.

Mit dem Primärteil kann in bzw. entlang der Führungseinrichtung ein magnetisches Wanderfeld erzeugt werden, das in Verbindung mit dem Sekundärteil bzw. der Läufereinrichtung zur Fortbewegung des Förderelements verwendet wird. Mechanische, verschleißträchtige Eingriffs- oder Kopplungsmittel wie zum Beispiel Getriebe oder Kettenzüge können entfallen. Mit heutzutage verfügbarer Leistungselektronik lassen sich elektromagnetisch Antriebskräfte sehr präzise erzeugen, regeln und steuern. Damit ist eine hochgenaue Einstellung der Position und Geschwindigkeit für das Papierbahn-Förderelement möglich, was nicht nur der Erhöhung der Betriebssicherheit und -zuverlässigkeit, sondern auch der Anwendungsflexibilität dient. Insbesondere ist mit der Erfindung eine bidirektionale Verfahrbarkeit des Papierbahn-Förderelements innerhalb seiner Führungseinrichtung leicht möglich.

Um den teilweise stark gekrümmten Bahnen des Papierwegs innerhalb einer Druckmaschine Rechnung zu tragen, ist nach einer besonderen Ausbildung der Erfindung vorgesehen, daß der Primärteil und/oder Sekundärteil des Linearmotors in diskrete Stator- bzw. Läufersegmente untergliedert ist, die gegeneinander im Winkel und/oder beweglich, insbesondere gelenkig, aneinandergereiht sind. Damit ist eine Anpassung an die Papierbahn-Führungseinrichtung mit ihren starken Krümmungen gegeben. Das Wanderfeld des Linearmotors kann so Krümmungen mit mittleren Biegeradien bis hinunter zu 50 mm (entsprechend dem Papierweg bzw. dem Walzenradius einer Druckwalze) durchlaufen. In besonderer Ausbildung sind die Läufersegmente über Gelenke aneinandergekuppelt, welche dreidimensionale Relativbewegungen gegeneinander erlauben. Dadurch ist es dem Läufersegment möglich, nicht nur Kurven in einer Ebene, sondern auch zusätzlich oder gleichzeitig aus einer Ebene Steigungen längs einer anderen dazu schrägen oder senkrechten Ebene zu bewältigen.

Zur Erhöhung der Schubkraft zur Bewegung des Papierbahn-Förderelements ist in Weiterbildung des Gedankens der segmentweisen Strukturierung vorgesehen, daß die Stator- und/oder Läufersegmente einander teilweise überlappend angeordnet sind. Der Überlappungsbereich kann dabei das Profil einer Raute oder einer rundlichen Wölbung (kreis- oder ellipsenartig) aufweisen. Andererseits ist es bei den Statorsegmenten zweckmäßig, sie in frei wählbaren, diskreten Abständen voneinander in oder an der Führungseinrichtung anzuordnen. Damit lassen sich Kurvenbahnen mit einheitlichen Stator-Bauelementen realisieren.

Mit Vorteil sind die Stator- und/oder Läufersegmente mit einem Abstand voneinander angeordnet, welcher der Polteilung des Linearmotors entspricht.

Damit die elektromagnetische Kopplung zwischen Primär- und Sekundärteil des Linearmotors über den Luftspalt gewährleistet ist, ist nach einer Ausführung der Erfindung die Führungseinrichtung mit nicht-magnetischem und nicht-leitendem Material, vorzugsweise Kunststoff, hergestellt. Mit der Führungseinrichtung, insbesondere einer Führungsschiene, kann ein bewegbarer Schlitten in Eingriff stehen, der das Förderelement und das Sekundärteil des Linearmotors aufweist, insbesondere trägt. Zur radialen und axialen Abstützung des Schlittens in der Führungseinrichtung sind Rollen- oder Wälzlager von Vorteil; über diese ist das Sekundärteil nebst damit verbundenen Schlitten gegenüber der Führungsschiene und dem damit verbundenen Primärteil weitgehend frei von Reibung und Verschleiß verstellbar.

Daneben kann die Führungsschiene noch die weitere Funktion der (Mit-)Aufnahme von Stator-Wicklungssträngen des bestromten Primärteiles des Linearmotors übernehmen. Damit ist eine Einbettung der Stator-Stromleiter einschließlich Erdung gegeben, was zweckmäßig für die Sicherheit und Zuverlässigkeit der Einzugsvorrichtung ist.

Grundsätzlich können für die Erfindung Linearmotoren synchroner oder asynchroner Bauart verwendet werden. Da bei letzterem die Einhaltung eines bestimmten Luftspaltes schwierig sein kann, ist nach derzeitigem Wissenstand der Einsatz eines synchronen Linearmotors, bei dem Sekundärteil vorzugsweise mit Permanentmagneten zur Erzeugung des Erregerfeldes bestückt ist, vorzuziehen. Der Synchronmotor ist in seiner Bauart robuster, und die Einhaltung präziser Einbau-Randbedingungen ist dabei nicht so kritisch wie beim Asynchronmotor.

Wie an sich bekannt, wird beim Linearmotor die Lage des Sekundärteils mittels entsprechender Sensoren erfaßt, die dazu - im Falle der Sychronbauweise - das Feld der Permanentmagneten auf dem Sekundärteil zur Bestimmung der Position nutzen.

In Abweichung von der oben genannten, nachveröffentlichten EP-Patentanmeldung weist die Führungsschiene, die aus nichtmagnetischem und nichtleitendem bzw. elektrisch isolierendem Material, vorzugsweise Kunststoff, gebildet ist, einen oder mehrere elektrische Leitungsstränge auf, mit denen die Statoreinrichtung zu ihrer Bestromung gekoppelt und/oder verbunden ist. Indem Stromleiter in die Linear-Führungsschiene eingebracht bzw. eingebettet sind, wird gleichsam eine "flexible" Linearstromführung erzielt: An beliebigen Stellen und in beliebigen Abständen voneinander können diskrete Stationen der Statoreinrichtung angebracht und zu ihrer Bestromung mit den Leitungssträngen in oder an der Führungsschiene gekoppelt werden. Die mit einer derartigen flexiblen Linearstromführung ausgestattete Führungsschiene läßt sich dabei aufgrund ihrer Ausführung aus isolierendem Material im Luftspalt zwischen der Stator- und der Läufereinrichtung des elektrischen Linearmotors anordnen. Damit läßt sich eine kompakte und platzsparende Bauweise erzielen mit der Möglichkeit, die Abstände der einzelnen Stator-Stationen voneinander an der Führungsschiene je nach Anwendungsfall und Anforderungen anpassen zu können. Desweiteren wird der Vorteil erzielt, daß sich defekte Stationen der Statoreinrichtung schnell erkennen, reparieren und/oder auswechseln lassen, wodurch insgesamt die Verfügbarkeit und Wartbarkeit des Antriebs- und zugehörigen Transportsystems erhöht ist. Indem aufgrund des erfindungsgemäßen Konzepts einzelne Stator-Stationen oder - segmente sich an beliebiger Stelle der Führungsschiene positionieren lassen, ist insbesondere die Möglichkeit gegeben, daß die Abstände der Statorsegmente beliebige Vielfache der Polteilung betragen können.

Damit an die elektrischen Leitungsstränge der Führungsschiene Gegenstände verschiedenster Art schnell ankoppelbar sind, sind nach einer Ausbildung der Erfindung ein oder mehrere Befestigungsmittel, insbesondere Rast- und/oder Schnapphakenelemente, beispielsweise zur Befestigung der Statoreinrichtung oder eines Teiles davon mit der Führungsschiene oder nach einem anderen Beispiel zum Anbringen eines oder mehrerer Kontaktierungselemente an der Führungsschiene vorgesehen. Diese Kontaktierungselemente sind dabei in oder auf den Befestigungsmitteln angeordnet und/oder ausgebildet und dienen dazu, elektrisch betreibbare Gegenstände oder Elemente mit den elektrischen Leitungssträngen der Führungsschiene zu verbinden. Besonders bei einer Statoreinrichtung mit einer oder mehreren, zu bestromenden Wicklungen können die Kontaktierungselemente zum Abschluß der Stator-Wicklungsein- und/oder -ausgänge nützlich sein, wobei diese in oder auf der Statoreinrichtung und/oder den Befestigungsmitteln angeordnet oder ausgebildet und bei Betätigung der Befestigungsmittel in Kontakt und/oder Eingriff mit den Leitungssträngen der Führungsschiene zur Erzeugung einer elektrischen Verbindung zu den Stator-Wicklungsein- und/oder-ausgängen bringbar sind.

Zu einer platzsparenden Bauweise führt es, wenn nach weiterer Ausbildung der Erfindung die Befestigungsmittel baulich mit der Statoreinrichtung, insbesondere dessen Gehäuse, integriert und/oder mit vorstehenden, federnden Schnapphaken zum Umfassen der Führungsschiene ausgebildet sind. Gleichzeitig wird dadurch die Handhabung und Wartbarkeit erleichtert, weil über die Schnapphaken einzelne Statorstationen einfach und schnell an der Führungsschiene anbringbar und in Kontakt mit den elektrischen Leitungssträngen setzbar sind.

Zweckmäßig ist die Führungsschiene nicht aus einem einzigen Stück, sondern aus separaten Teilen abschnittsweise zusammengesetzt. Dabei entstehen zwischen den jeweiligen Anschlußbereichen Stoßnähte oder Fugen, welche auch die elektrischen Leitungsstränge in der Führungsschiene durchsetzen und dabei zu elektrischen Kontaktschwierigkeiten führen können. Dieses Problem wird mit einer besonderen Ausbildung der Erfindung dadurch gelöst, daß beidseits der Stoßfuge je ein separates Befestigungsmittel mit ein oder mehreren Kontaktierungselementen angeordnet ist, und die Kontaktierungselemente auf unterschiedlichen Seiten bezüglich der Stoßnaht durch eine oder mehrere Überbrückungsleitungen elektrisch verbunden sind. Damit kann der Stromfluß ausschließlich oder auch nur zusätzlich bzw. redundant von einem Führungsschienenabschnitt über die Überbrückungsleitung zum anschließenden Führungsschienenabschnitt unter Umgehung der Stoßfuge erfolgen. Mit Hilfe der vorzugsweise aufschnappbaren Befestigungsmittel läßt sich in manuell schneller und komfortabler Weise diese Überbrückung bewerkstelligen.

Um einen Einzug von bahnförmigem Material beispielsweise entlang unterschiedlicher Bahnwege bzw. Spuren innerhalb der Druckmaschine vomehmen zu können, wird in der eingangs genannten, nachveröffentlichten EP-Patentanmeldung wenigstens eine schaltbare Weiche vorgeschlagen, die eine über ein Stellelement rotierbare Scheibe besitzt, auf der in unterschiedliche Richtungen gekrümmte Abschnitte der Führungsschiene angeordnet sind. Demgegenüber wird nach einer Ausbildung der Erfindung vorgeschlagen, daß die schaltbare Weiche zur Richtungs- oder Spuränderung für das Sekundärteil mit Förderelement Abschnitte oder Segmente des Primärteiles bzw. der Statoreinrichtung oder sonstige Elektromagnetmittel aufweist, die je einer der verzweigenden Weichenrichtungen oder -spuren zugeordnet und zur Richtungsbestimmung betätigbar oder verstellbar sind. Damit läßt sich in konstruktiv einfacher Weise die ohnehin für den elektrischen Linearantrieb vorhandene "Infrastruktur" an elektromagnetischen Mitteln und Elementen ausnützen.

Daneben ist auf der Basis der Erfindung auch die Möglichkeit gegeben, bewegliche Abschnitte oder Segmente der Weiche einzeln oder gemeinsam quer oder schräg zur jeweiligen Weichenspur bzw. zu den ortsfesten Weichenabschnitten und -segmenten in einer Linearführung zu verstellen, um für das Sekundärteil und die damit verbundenen Fördermittel eine Spur- bzw. Bahnänderung herbeizuführen. Dabei eröffnet sich die besonders vorteilhafte Möglichkeit, zu dieser Verstellung ebenfalls einen elektrischen Linearantrieb einzusetzen und dabei bereits von vorhandener elektromagnetischer "Infrastruktur" für den Antrieb der Förderelemente Gebrauch zu machen.

In der eingangs genannten nachveröffentlichten EP-Patentanmeldung sind an der Zugeinrichtung vorstehende Führungselemente angeformt, die in einer entsprechenden, in der Führungsschiene geformten Nut geführt werden. Dabei besitzt die Führungsschiene einen T-förmigen Innenraum, wobei die den Führungselementen entsprechende Nut den Oberteil bzw. Kopf des T-Profils bildet. In Abweichung davon wird nach einer besonderen Ausbildung der Erfindung, die ebenfalls auf einer Gleitführung des Sekundärteiles bzw. Läufers beruht, vorgeschlagen, die Gleitführung mit zueinander komplementären Eingriffselementen in oder auf der Führungsschiene einerseits und im Sekundärteil und/oder den Förderelementen andererseits zu realisieren, und zwar auf beiden Randseiten der Führungsschiene bzw. der Bewegungsspur.

Weitere Einzelheiten, Merkmale, Vorteile und Wirkungen auf der Basis der Erfindung ergeben sich aus den Ansprüchen sowie der nachfolgenden Beschreibung bevorzugter Ausführungsformen der Erfindung und den Zeichnungen. Diese zeigen in:
- Fig. 1: eine Draufsicht auf eine erfindungsgemäße Anlage oder Anordnung zum Einzug einer Papierbahn in eine Druckmaschine,
- Fig. 2: einen Längsschnitt gemäß Linie II - II in Fig. 1,
- Fig. 3: einen Querschnitt gemäß Linie III - III in Fig. 1,
- Fig. 4: einen gegenüber Fig. 3 abgewandelten Querschnitt,
- Fig. 5: in querschnittlicher Darstellung eine abgewandelte Ausführung der Erfindung mit Führungsschiene und diese umfassenden Statorsegment,
- Fig. 6: eine querschnittliche, detailliertere Darstellung der Befestigung des Stators an der Führungsschiene,
- Fig. 7: die Gesamtanordnung mit einer in einzelne Abschnitte untergliederte Führungsschiene, daran befestigten Statorelementen und zugehörigen Befestigungsmitteln in Längsansicht,
- Fig. 8: eine Draufsicht auf die Anordnung gemäß Fig. 7,
- Fig. 9: eine Draufsicht auf ein Läufersegment mit Kugelgelenk,
- Fig. 10: eine Ansicht gemäß Richtung X in Fig. 8,
- Fig. 11: eine Ansicht gemäß Richtung XI in Fig. 8,
- Fig. 12: eine Draufsicht auf eine segmentierte Läufereinrichtung mit unterschiedlichen Läufer-Segmentgeometrien, bewegt längs einer eben gekrümmten Bahn,
- Fig. 13: eine Seitenansicht auf eine gelenkig segmentierte Läufereinrichtung, bewegt längs einer gekrümmten Bahn in einer Ebene senkrecht zu der in Fig. 12,
- Fig. 14: eine Schnittdarstellung einer alternativen Gelenkausführung zwischen zwei Läufersegmenten,
- Fig. 15: eine Fig. 13 entsprechende Darstellung einer segmentierten Läufereinrichtung, bewegt längs einer gekrümmten Bahn in einer Ebene senkrecht zu der in Fig. 12,
- Fig. 16: in Draufsicht eine Weiche der Führungsschiene,
- Fig. 17: eine Schnittdarstellung gemäß Linie XVII-XVII in Fig. 16,
- Fig. 18: in Draufsicht eine alternative Weichenform für die Führungsschiene der Vorrichtung gemäß Erfindung,
- Fig. 19 und Fig. 20: in schematische Draufsicht auf eine weitere Ausführung einer Weiche mit jeweils unterschiedlich gestellter Spurrichtung für die Führungsschiene der erfindungsgemäßen Vorrichtung,
- Fig. 21: im Querschnitt die Führungsschiene der erfindungsgemäßen Vorrichtung mit Gleitführung.

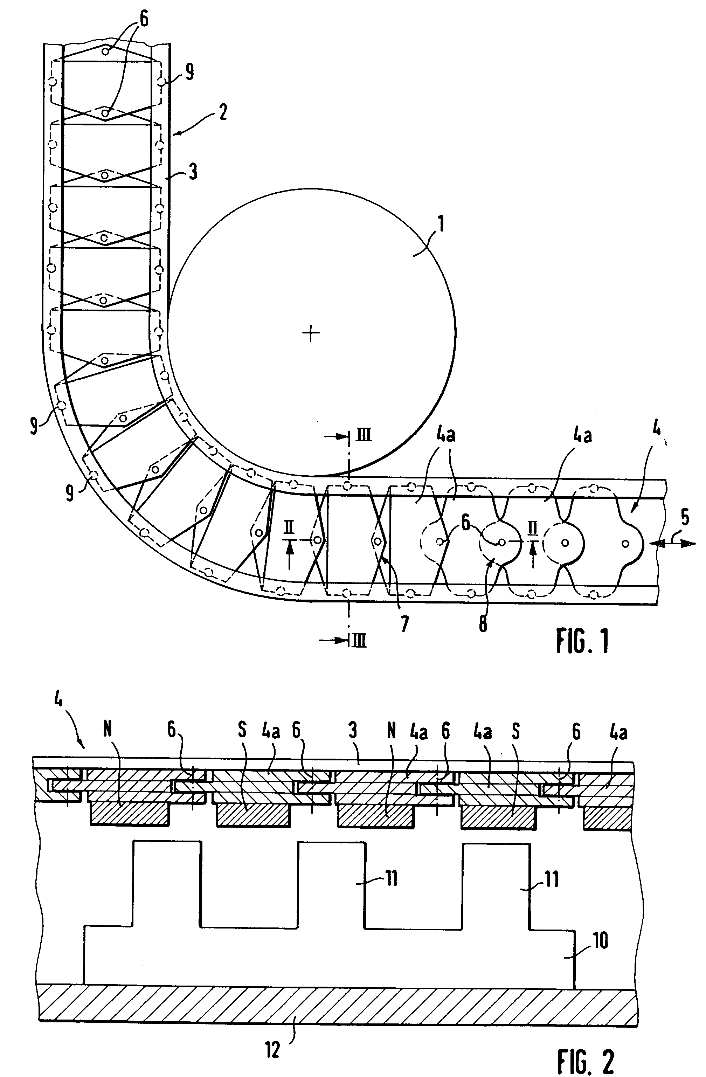

Gemäß Fig. 1 ist etwa im Winkel von 90° um eine Druckwalze 1 eine Führungseinrichtung 2 geführt. Sie besteht im wesentlichen aus einer Führungsschiene 3, innerhalb welcher ein verfahrbarer, mehrgliedriger Schlitten 4 aufgenommen ist. Dieser ist aus seiner Mehrzahl von Läufersegmenten 4a zusammengesetzt, die über Nietverbindungen 6 an beiden Enden in Richtung der Fördereinrichtung 2 gelenkig aneinandergehängt sind. In diesem Bereich ist ferner eine teilweise Überlappung gegeben, sei es in Rautenform 7, sei es in rundlich-gewölbter Form 8. Damit wird eine Überdeckung des elektromagnetischen Wirkungsbereichs erreicht, was die Schubkraft des innerhalb der Führungsschiene 3 erzeugten, magnetischen Wanderfeldes auf den Schlitten 4 fördert. An den Nietverbindungen 6 können ferner (nicht gezeichnete) Mitnehmerhaken angebracht sein, die zum Ziehen der (nicht gezeichneten) Papierbahn in die Druckmaschine dienen. Nach dem Ausklinken des Hakens aus der Papierbahn kann der Schlitten wieder in seine Grundstellung zurückbewegt werden. Vorzugsweise ist der Läufer-Schlitten 4 mit Permanentmagneten bestückt, um die elektromagnetische Kopplung mit dem magnetischen Wanderfeld innerhalb der Führungsschiene 3 herbeizuführen. Zur axialen und radialen Abstützung des Schlittens 4 sind an der Innenwandung der Führungsschiene 3 pro Läufersegment 4a beidseitig Kugellager 9 angeordnet, mittels derer der Schlitten 4 in bidirektionaler Richtung 5 verfahrbar ist.

Gemäß Fig. 2 ist pro Läufersegment 4a je ein Permanentmagnetelement N, S mit abwechselnder Polarität an der jeweiligen Unterseite angebracht. Die Anordnung entspricht der Synchronmotor-Bauart, und die Permanentmagneten N, S können Selten-Erden-Magnete sein. Unterhalb des Läuferschlittens 4 ist der Primärteil bzw. die Statoreinrichtung 10 mit den Polelementen 11 angeordnet.

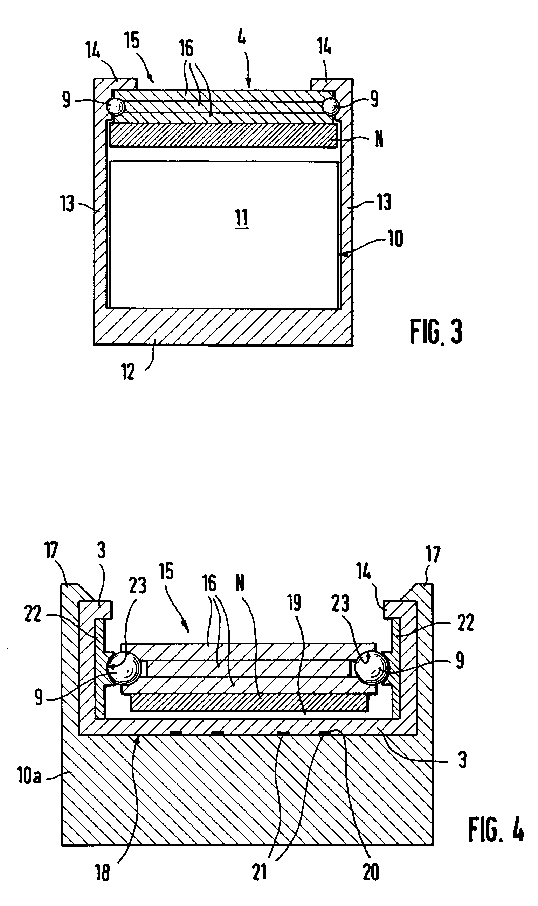

Wie besser aus Fig. 3 ersichtlich, dient ein Tragrahmen 12 zur Aufnahme der gesamten Anordnung mit Primärteil 10 und Sekundärteil bzw. Läufer-Schlitten 4. Der Tragrahmen 12 besitzt im Querschnitt etwa rechteckiges U-Profil, wobei die beiden Schenkel 13 an ihren oberen bzw. freien Enden nach innen gerichtete Vorsprünge 14 aufweisen, nach Art eines C-Profils, wodurch die Linearmotor-Anordnung nebst Kugellager 9 klammerartig umfaßt ist.

Gemäß Fig. 4 (wie auch nach Fig. 3) ist die magnetische Rückschlußeinrichtung 15 aus mehreren Blechschichten 16 zusammengesetzt und auf der Oberseite eines Permanentmagnetelements N oder S angeordnet.

Gemäß der besonderen Ausführung nach Fig. 4 ist die Führungsschiene 3 als nach oben offenes C-artiges Profil ausgebildet, worauf der Primärteil bzw. die Statoreinrichtung 10 mit komplementären, beidseitigen Schnapphaken 17 aufgedrückt und eingerastet ist. Nach einer bevorzugten Ausführung sind in frei wählbaren, aber diskreten Abständen einzelne Statorsegmente 10a, die beispielsweise der in Fig. 2 ersichtlichen Polteilung entsprechen, auf der geschlossenen, langen Außenseite 18 der Führungsschiene 3, die vorzugsweise aus Kunststoff ist, angebracht. In der querschnittlich langen Unterseite 18, die der dem Luftspalt 19 zugewandten Seite der Führungsschiene 3 abgewandt ist, sind Vertiefungen 20 ausgebildet, in die Kupferbahnen als elektrische Leitungsstränge 21 zur Bestromung des Statorsegments 10a eingelassen sind. Auf die Unterseite 18 der Führungsschiene 3 ist das Statorsegment 10a so aufgesetzt, daß die Leitungsstränge 21 vom Stator-Grundkörper miteingebettet sind. Mit geregelter Bestromung der Statorsegmente 10a wird ein magnetisches Wanderfeld erzeugt, dem der Läufer-Schlitten 4 folgt. Der Verfahrbarkeit des Schlittens 4 dienen die beidseitig angeordneten Kugellager 9, für die sowohl in der jeweils zugewandten Seite der Rückschlußeinrichtung 15 als auch in Wandelementen 22 an gegenüberliegenden Innenseiten der Führungsschiene 3 entsprechend gewölbte oder gerundete Laufflächen 23 ausgebildet sind. Diese dienen als Innen- bzw. Außenring des Kugellagers 9.

Durch entsprechende Regelung der Spannungen bzw. des durch die Kupferbahnen bzw. Leitungsstränge 21 fließenden Stroms in Frequenz, Amplitude und Phase kann Geschwindigkeit, Kraft und Richtung der Bewegung des Läufer-Schlitten geregelt werden. Zwischen den einzelnen Statorsegmenten 10a sind diskrete Abstände als beliebige Vielfache einer Polteilung einzuhalten.

Die Erfindung ist nicht auf die beschriebenen Ausführungsformen beschränkt: Zur Verbindung der einzelnen Läufersegmente 5 können auch Sicken dienen, die in den Rückschlußblechen ausgebildet sind, wobei die Abstände unterschiedlicher Läufersegmente einander überlappen können. Die Überlappung ist in Fig. 1 und Fig. 2 anhand der Nietverbindungen 6 dargestellt bzw. ersichtlich.

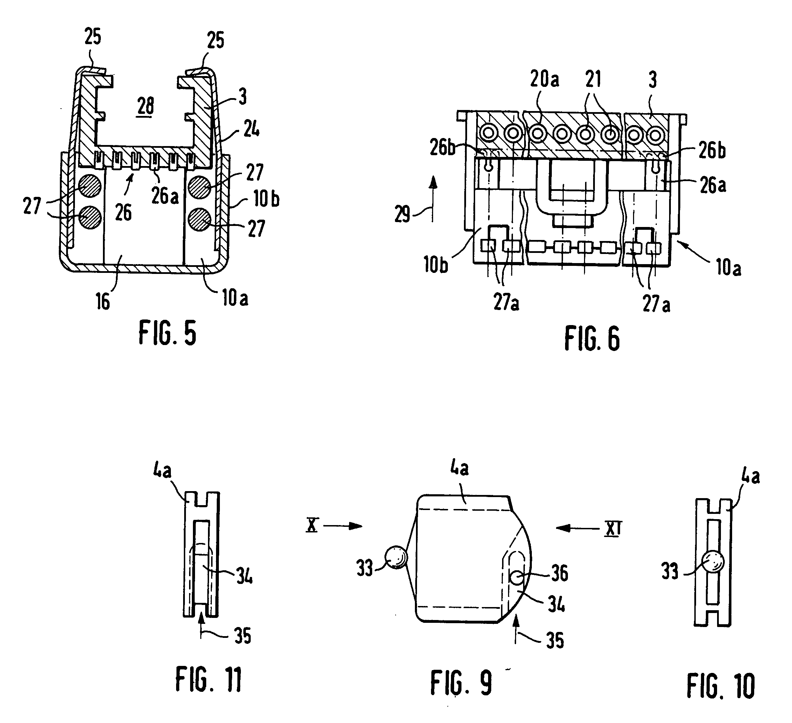

Gemäß Fig. 5 sind an gegenüberliegenden Innenseiten eines Statorgehäuses 10b des Statorsegmentes 10a Befestigungsmittel in Form von Federklemmen 24 angebracht, die aus dem U-förmigen Querschnitt des Statorgehäuses 10b herausragen und zwischen sich die im Beispiel aus Kunststoff hergestellte Führungsschiene 3 umfassen. An ihren oberen, freien Enden weisen die Federklemmen 24 jeweils nach innen gebogene, einander zugewandte Hakenenden 25 auf, mittels welcher die Befestigungsanordnung mit Federklemmen 24 gleichsam auf die Führungsschiene 3 in leichter Handhabung aufgeschnappt werden kann. Im Zuge dieses federnd-elastischen Aufschnappvorganges werden Kontaktierungselemente 26, beispielsweise in Form von Schneidklemmen 26a, durch das Kunststoffmaterial gedrückt und dabei in elektrisch kontaktgebenden Eingriff mit (in Fig. 5 nicht gezeichneten) elektrischen stromführenden Leitungssträngen gebracht. Dies erfolgt dadurch, daß scherenartige Enden 26b der Schneidklemmen 26a, welche das Kunststoffmaterial der Führungsschiene 3 bis zu den darin eingebetteten Kupferbahnen bzw. Stromleitungssträngen durchschnitten und durchdrungen haben, aufgrund ihrer Schneidwirkung letztere zumindest teilweise durchdringen oder anschneiden. Damit ist ein zuverlässiger elektrischer Kontakt gewährleistet. An ihren den Schneidenden abgewandten Enden sind die Schneidklemmen 26a mit den Eingängen und Ausgängen von Wicklungsköpfen 27 des Statorsegmentes 10a verbunden. Folglich ist bei dieser Anordnung durch Aufschnappen des Statorelementes 10a über die Federklemmen 24 mit Hakenenden 25 auf die Führungsschiene 3 sowie über die Kontaktierungselemente 26 in Form von Schneidklemmen 26a in manuell einfacher Weise die Bestromung des Stators an praktisch beliebiger Stelle der Führungsschiene 3 herstellbar. Der von ihr umgebene, freie Innenraum 28 dient der Aufnahme und Führung der Läufereinrichtung bzw. des Sekundärteiles mit Schlitten und/oder Läufersegment im Rahmen des elektrischen Linearantriebs. Gemäß Fig. 6 sind die elektrischen Leitungsstränge 21 von Kunststoff vollständig umgeben in der Führungsschiene 3 eingebettet, die in diesem Ausführungsbeispiel ohne C-artiges Profil und ohne Innen-Hohlraum ausgeführt ist. Jedem der Leitungsstränge 21 ist eine Schneidklemme 26a mit ihrem geschlitzten oder scherenartigen Ende 26b zugeordnet. Am anderen Ende sind sie mit jeweils zugeordneten Stator-Wicklungsein- und/oder -ausgängen 27a verbunden. Durch Bewegung des Stators mit seinem Statorgehäuse 10b in Aufdruckrichtung 29 an die Unterseite der Führungsschiene 3 durchscheren die Schneidklemmenspitzen 26b das Führungsschienen-Kunststoffmaterial, bis sie in die elektrischen Leitungsstränge 21 einschneiden und darin einschnappen bzw. sich festklemmen. Dadurch läßt sich alternativ zur Befestigungsausführung nach Fig. 5 oder zusätzlich dazu eine Befestigung des Statorsegments 10a sowie dessen Anschluß an die elektrischen Leitungsstränge 21 zuverlässig erreichen.

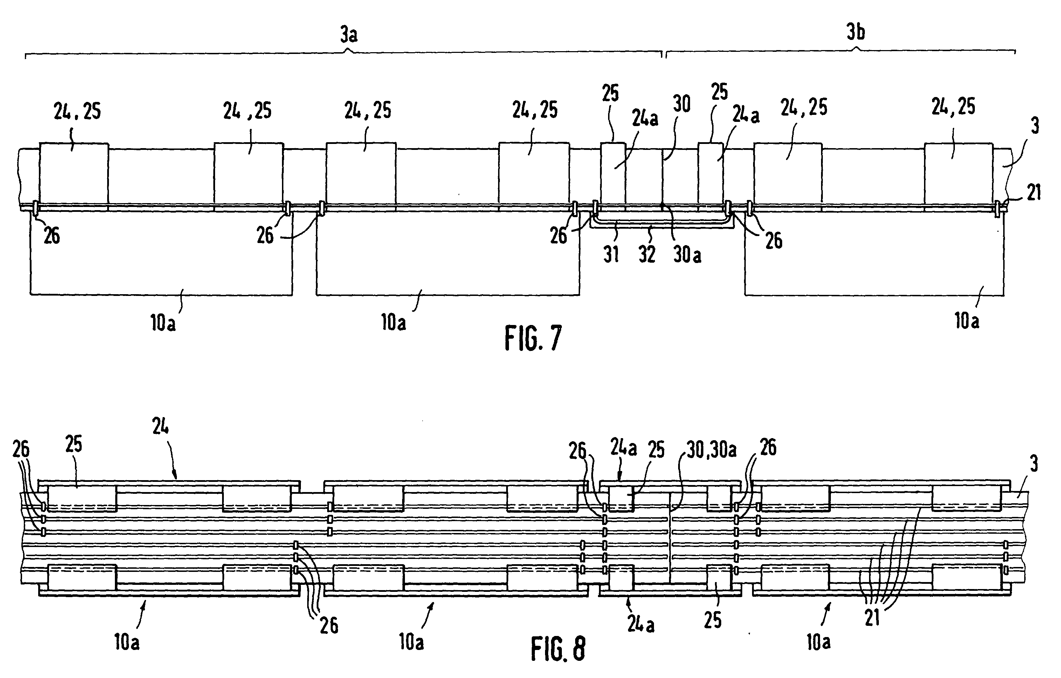

In Fig. 7 ist in Längsansicht die Gesamtanordnung mit mehreren diskreten Statorstationen bzw. -segmenten 10a und zugehörigen Befestigungs- bzw. Aufschnappmitteln 24, 25 ausschnittsweise dargestellt, wobei die Führungsschiene 3 in Abschnitte 3a, 3b untergliedert ist. Wie auch aus der Draufsicht nach Fig. 8 erkennbar, bilden die beiden Abschnitte 3a, 3b in dem Bereich, wo sie stirnseitig aneinandergesetzt sind, eine Stoßfuge oder -naht 30, die auch den elektrischen Leitungsstrang 21 mit ihrem Unterabschnitt 30a durchsetzt. Dies kann zu elektrischen Kontaktschwierigkeiten bzw. Unterbrechung der Stromleitung führen. Zur Abhilfe wird eine Überbrückungsleitung 31 eingesetzt, deren beide Enden zu je einer Seite der Stoßnaht 30 bzw. des Stoßnaht-Unterabschnitts 30a mittels einer speziell vorgesehenen Schneidklemme 26a mit dem elektrischen Leitungsstrang 21 verbunden ist. Um diese Schneidklemmen 26a zum Durchscheren der Führungsschiene 3 und in kontaktgebenden Eingriff mit dem Leitungsstrang 21 zu bringen, sind speziell ausgebildete Federklemmen 24a mit Hakenenden 25 vorgesehen; diese speziellen Federklemmen 24a weisen keine Statormittel auf bzw. sind nicht mit einem Statorsegment verbunden. Ansonsten sind die speziellen Federklemmen 24a analog denen gemäß Fig. 5 mit Hakenenden 25 und unterseitigem Gehäuse gestaltet. Die Überbrückungsleitung 31 zwischen den beiden Kontaktierungselementen 26 bzw. Schneidklemmen 26a ist zum Schutz gegen äußere Einwirkungen in einem Kunststoffbett 32 untergebracht, welches sich an der Unterseite der Führungsschiene 3 in deren Stoßnahtbereich 30 befindet.

Aus einer Zusammenschau der Figuren 7 und 8 läßt sich entnehmen, daß durch das Zusammenwirken der in der Führungsschiene 3 eingebetteten Stromleitungsstränge 21, der Befestigungsmittel 24, 25 und der Kontaktierungselemente 26 sich diskrete Statorsegmente praktisch in beliebigen Abständen voneinander bzw. an beliebigen Stellen der Führungsschiene 3 anbringen und elektrisch anschließen lassen, um je nach Randbedingungen und Anforderungen den Antrieb einer Läufereinrichtung zu bewerkstelligen. Im dargestellten Ausführungsbeispiel können pro Statorsegment 10a drei Wicklungseingänge und drei Wicklungsausgänge über insgesamt sechs Kontaktierungselemente 26 mit den sechs Stromleitungssträngen 21 verbunden sein. Im Bereich beidseits der Stoßnaht 30 ist jede der sechs Stromleitungsstränge 21 über zwei Kontaktierungselemente 26 und einer zugehörigen Überbrückungsleitung 31 zwischen diesen zur Sicherstellung des elektrischen Stromflusses überbrückt. Mit dieser Anordnung läßt sich eine hohe Flexibilität sowohl bei der Gestaltung mit einzelnen Führungsschienenabschnitten 3a, 3b als auch bei der elektrotechnischen Auslegung des Primärteiles, insbesondere dessen Polteilung, erzielen.

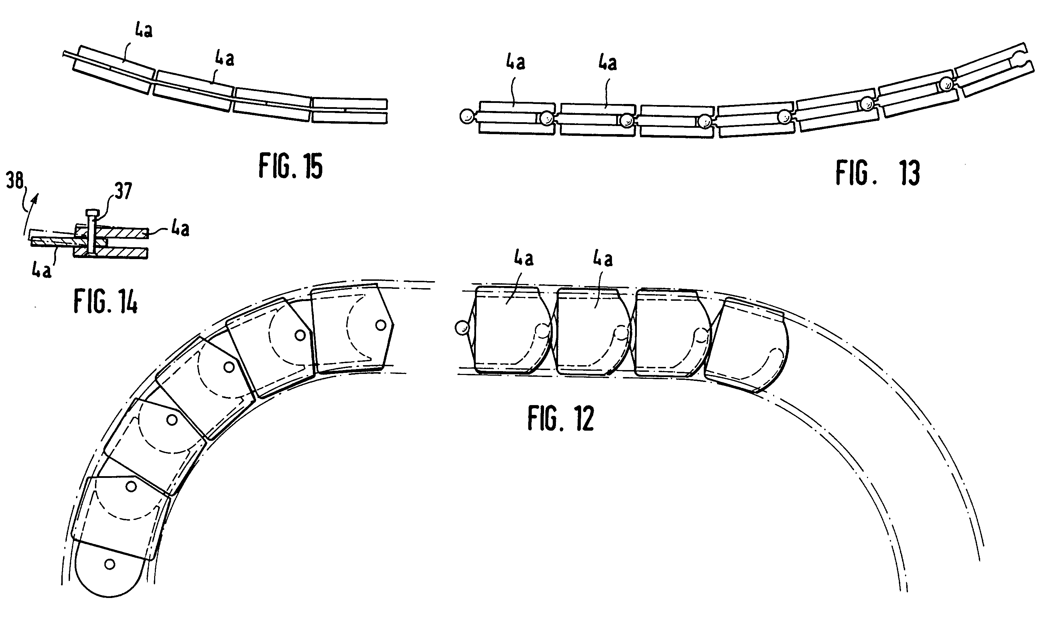

Gemäß Fig. 9 - 11 sind zur Realisierung eines mehrgliedrigen Läufers bzw. Sekundärteiles die Läufersegmente 4a über Kugelgelenke miteinander verbunden. Hierzu ist das Läufersegment 4a an einer Stirnseite mit einem Kugelkopf 33 versehen, der von der Stirnseite vorsteht zum Einrücken in einen komplementären, sacklochartigen Aufnahmeraum 34 eines benachbarten Läufersegments. Die Längsrichtung des Aufnahmeraums 34 läuft etwa quer zur Läufer-Fortbewegungsrichtung, so daß zwei Läufersegmente 4a dadurch aneinandergehängt werden können, daß der Kugelkopf 33 des einen Läufersegments an den Eingang des Aufnahmeraums 34 angesetzt und dann quer zur (späteren) Läufer-Fortbewegungsrichtung bewegt wird. Die Kugelkopf-Einführrichtung in den Aufnahmeraum 34 ist mit 35 bezeichnet. Der Kugelkopf-Aufnahmeraum 34 läßt sich in seiner Querrichtung noch mit einem Sicherungsstift (nicht gezeichnet) durchsetzen, wofür eine Queraussparung 36 vorgesehen ist, welche in den Aufnahmeraum 34 in Querrichtung mündet. Mit diesem Konzept der Aneinanderreihung einzelner Läufersegmente 4a über Kugelgelenke läßt sich eine längere Läufersegmentreihe längs gekrümmter Bahnen im dreidimensionalen Raum, also sowohl in einer gekrümmten Bahn einer ersten Ebene (Fig. 12) als auch längs einer gekrümmten Bahn in einer zweiten, dazu senkrechten Ebene (Fig. 13), realisieren.

Als alternatives Gelenkkonzept können gemäß Fig. 14 elastische Achsstifte 37 dienen, deren Längsrichtungen bei Krafteinwirkung gekrümmt werden können. Dann können die aneinandergereihten Läufersegmente 4a, die beide um einen gemeinsamen Achs- bzw. Scharnierstift 37 aneinandergelenkt sind, gegeneinander um eine Achse verschwenkt werden (in Fig. 14 strichpunktiert und mit Schwenkrichtung 38 angedeutet), welche senkrecht zum Scharnierstift 37 verläuft. Als Realisierungsmöglichkeit für einen derartigen, elastischen Scharnierstift 37 ist der Einsatz einer Schraubenfeder denkbar. In Fig. 15 ist veranschaulicht, daß mit diesem Gelenkkonzept ebenfalls Steigungen zumindest in geringerem Umfang bewältigt werden können.

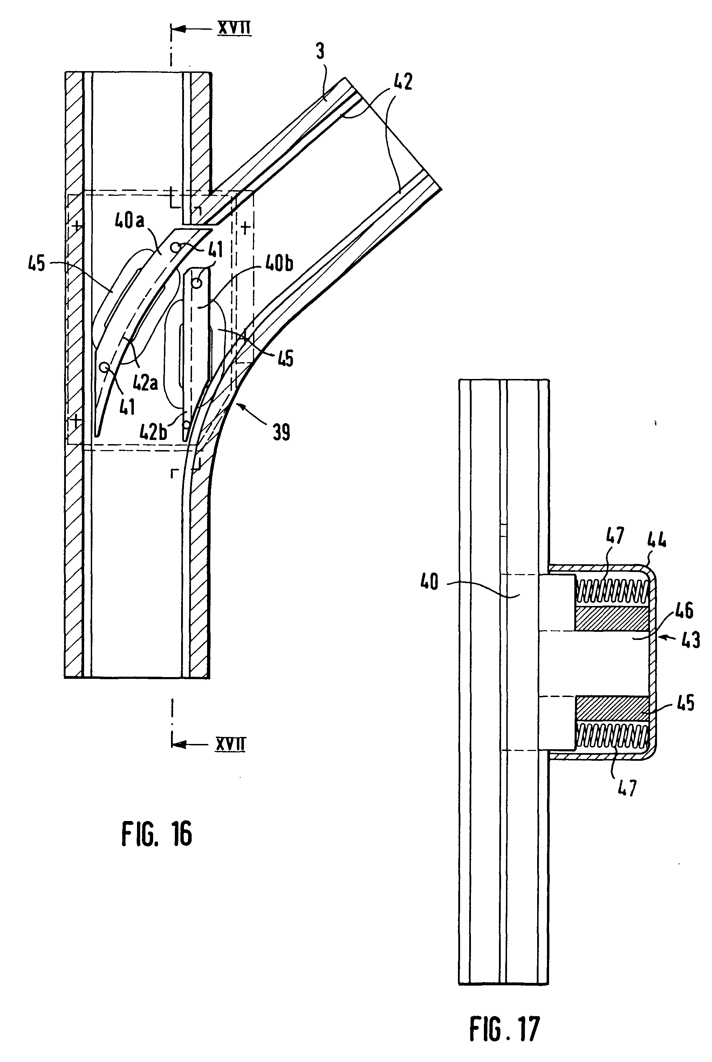

Gemäß Fig. 16 und 17 ist die Führungsschiene 3 der erfindungsgemäßen Vorrichtung zur Richtungs- oder Spuränderung für das mit Förderelementen verbundene Sekundärteil mit wenigstens einer schaltbaren Weiche 39 versehen. Diese ist unter anderem in richtungsbestimmende erste und zweite Spurabschnitte 40a, 40b untergliedert. Diese sind innerhalb der Führungsschiene bzw. im Weichenbereich 39 längs einer Weichenverstellführung 41 in einer Richtung verschiebbar gelagert, die senkrecht zur Grund- und Bewegungsebene der Führungsschiene 3 und zur Zeichenebene der Fig. 16 verläuft. Soll die Spur eines Läuferschlittens gegenüber der bisherigen Geradeausfahrt einer Krümmung nach rechts folgen, ist der erste Spurabschnitt 40a in der Führungsschiene 3 soweit nach oben zu verstellen, bis dessen Spurauflagefläche 42a bündig bzw. auf gleicher Höhe mit der sonstigen Spurauflagefläche 42 der Führungsschiene 3 liegt. Gleichzeitig ist der zweite Spurabschnitt 40b der Weiche 39 soweit nach unten in der Führungsschiene 3 zu verstellen, daß dessen Spurauflagefläche 42b dem Läuferschlitten keine richtungsbestimmenden Kräfte erteilen kann. Soll die Spurrichtung von einer Rechtskurve in Geradeausfahrt umgeschalten werden, ist in genau umgekehrter Reihenfolge zu verfahren, das heißt, der erste Spurabschnitt 40a ist mit seiner Spurauflagefläche 42a in die Führungsschiene 3 hineinzuziehen, während der zweite Spurabschnitt 40b mit seiner Spurauflagefläche 42b aus seiner eingezogenen Grundstellung in die Aktivstellung hochzuheben ist, damit dessen Spurauflagefläche 42b in richtungserteilenden Eingriff mit dem Läuferschlitten kommen kann. Der Verstellung des ersten oder zweiten Spurabschnitts 40a, 40b dient jeweils ein Elektromagnet 43, der in einem Schaltkasten 44 untergebracht und mit einer Spule 45 und einem davon umwundenen Weichmagneten 46 realisiert ist. Bei Erregung des Elektromagneten 43 wird der jeweilige Spurabschnitt 40a, 40b der Weiche 39 gleichsam wie ein Anker gegen die Kraft von Federelementen 47 in die inaktive, in die Führungsschiene 3 hineinversenkte Grundstellung gezogen. Soll der jeweilige Spurabschnitt 40 in seine richtungsbestimmende Stellung versetzt werden, wird der Elektromagnet 43 ausgeschalten bzw. stromlos geschalten, so daß die Federelemente 47 den jeweiligen Spurabschnitt bzw. Anker 40 aus dem Bodenbereich der Führungsschiene 3 nach oben drücken, so daß die jeweilige Spurauflagefläche der Weiche 39 auf gleicher Höhe mit der sonstigen Spurauflagefläche der Führungsschiene 3 liegt.

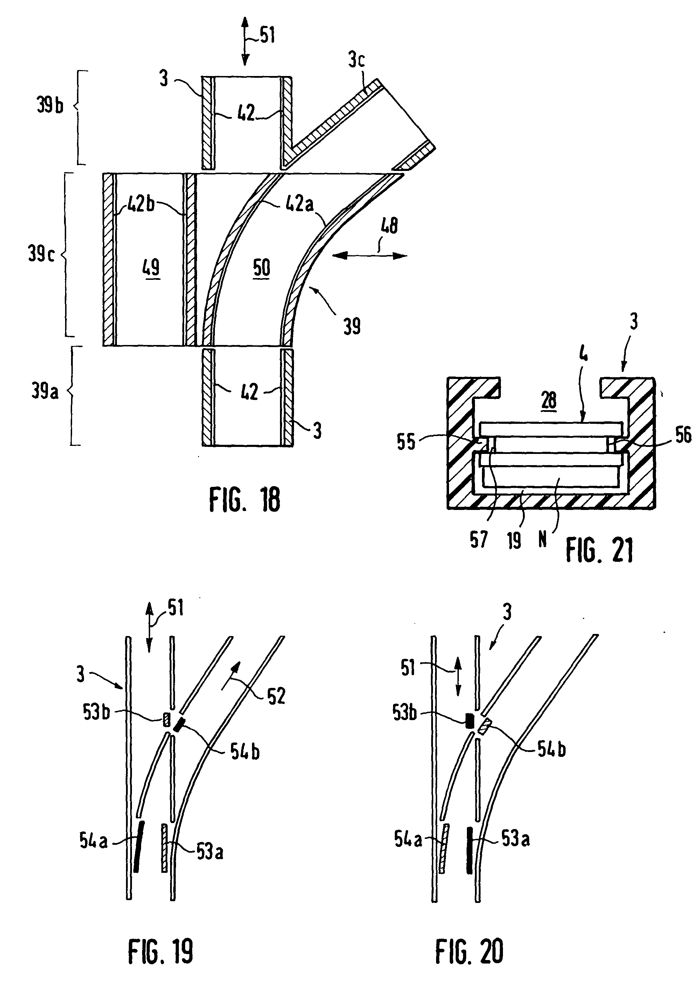

Anhand von Fig. 18 ist eine alternative Form für eine Weiche 39 beschrieben: Sie ist untergliedert in zwei ortsfeste Abschnitte 39a und 39b, von denen der eine 39b zur Spurverzweigung eine V-artige Struktur besitzt. Zwischen diesen ist ein Mittelabschnitt 39c in Linearrichtung 48 hin und her verstellbar geführt. Zu dieser Linearverstellung kann beispielsweise ein elektrischer Linearantrieb eingesetzt sein. Der verstellbare Mittelabschnitt 39c ist mit zwei voneinander getrennt verlaufenden Führungsschienensegmenten 49, 50 versehen, von denen das eine geradlinig und das andere gekrümmt verläuft. In der in Fig. 18 gezeigten Stellung ist gerade das gekrümmte Führungsschienensegment 50 aktiv, das heißt es verbindet den unteren Weichenabschnitt 39a mit einem von der Geradeausfahrt 51 schräg abweichenden Führungsschienenabschnitt 3c. Soll die Weiche 39 von der Kurvenfahrt gekrümmt nach rechts auf Geradeausfahrt 51 umgeschalten werden, ist dem Weichen-Mittelabschnitt 39c eine Linearbewegung (in Fig. 18) nach rechts zu erteilen, bis die Spurauflagenflächen 42b des geraden Führungsschienensegments 49 in einer Flucht liegen mit den in Geradeausrichtung 51 verlaufenden Spurauflageflächen 42 der geradeaus verlaufenden Führungsschienenteile der Weiche 39.

Gemäß Fig. 19 und 20 sind bei der erfindungsgemäßen Vorrichtung auch starre bzw. mechanisch nicht zu verändernde Weichen einsetzbar: Soll in der Führungsschiene 3 gemäß Fig. 19 eine nach rechts abweichende Bogenfahrt 52 mit dem Läuferschlitten vorgenommen werden, werden die der Geradeausfahrt 51 entsprechenden und in einer linearen Flucht liegenden Weichen-Elektromagnete 53a, 53b inaktiv geschaltet, während die in einer gekrümmten Flucht miteinander entsprechend der Bogenfahrt 52 liegenden Weichen-Elektromagnete 54a, 54b erregt sind. Auf diese Weise wird ein Läuferschlitten magnetisch in die Spur der Führungsschiene 3 für die Bogenfahrt 52 gezogen. Umgekehrt und sinngemäß gilt dies für die Geradeausfahrt nach Fig. 20, wofür die der Bogenfahrt 52 zugeordneten Weichen-Elektromagnete 54a, 54b inaktiv und die der Geradeausfahrt 51 zugeordneten Weichen-Elektromagnete 53a, 53b aktiv geschalten sind. Die Weichen-Elektromagnete können auch mittels einzelner, entsprechend gesteuerter Statorelemente oder -segmente des Primärteiles des elektrischen Linearantriebs realisiert sein.

Alternativ zu den oben beschriebenen Ausführungen nach Fig. 3 und 4 ist in Fig. 21 für die erfindungsgemäße Vorrichtung eine Führungsschiene 3 gezeigt, deren Querschnittsprofil vollständig und einstückig aus Kunststoff gefertigt sein kann. In ihrem Innenraum 28 ist der Läuferschlitten 4 aufgenommen und dabei von gegenüberliegenden Gleitschultern 55 getragen, die von den seitlich gegenüberliegenden Innenwänden der Führungsschiene 3 nach innen zum Innenraum 28 vorspringen. Im Läuferschlitten 4 sind sie jeweils in komplementär geformte Längsseitennuten 56 vorzugsweise mit etwas Querspiel 57 aufgenommen bzw. eingerückt. Dadurch ist eine gewisse Querverschiebbarkeit parallel zur Fahrtrichtungsebene gegeben, wohingegen die Lage des Läuferschlittens 4 senkrecht zur Fahrtrichtungsebene bzw. zum Luftspalt 19 festgelegt ist. Diese Art der Läuferschlittenführung in der Führungsschiene 3 läßt sich mit einem Minimum an Herstellungsaufwand und Konstruktionskomponenten realisieren.

## Patentansprüche

1. Vorrichtung zum Transport und zur Förderung von Stoffen und Stückgütern sowie einer Papierbahn in eine Druckmaschine, mit mindestens einem zum Eingriff mit dem Stoff oder Stückgut oder mit der Papierbahn ausgebildeten Förderelement, einer Führungsschiene (3), in und/oder längs welcher das oder die Förderelemente bewegbar sind, und einer das Förderelement erfassenden Antriebseinrichtung, um den Stoff, das Stückgut oder die Papierbahn über das Förderelement in und/oder durch die Maschine zu befördern, dadurch gekennzeichnet, daß die Antriebseinrichtung mit einem elektrischen Linearmotor (4,4a,N,S,10,10a,11) realisiert ist, dessen Sekundärteil beziehungsweise Läufereinrichtung (4,4a) das oder die Förderelemente erfaßt und/oder trägt, und dessen Primärteil beziehungsweise Statoreinrichtung (10,10a) ortsfest an der Führungsschiene (3) angebracht ist, und die Führungsschiene (3) aus nichtmagnetischem und nichtleitendem beziehungsweise elektrisch isolierendem Material gebildet ist und darin einen oder mehrere elektrische Leitungsstränge (21) aufweist, mit denen die Statoreinrichtung (10,10a) zu ihrer Bestromung gekoppelt und/oder verbunden ist.

2. Vorrichtung nach Anspruch 1, dadurch gekennzeichnet, daß die Führungsschiene (3) zumindest teilweise im Luftspalt (19) zwischen Stator- und Läufereinrichtung angeordnet ist (4,4a,10,10a).

3. Vorrichtung nach Anspruch 1 oder 2, dadurch gekennzeichnet, daß die Führungsschiene (3) im Querschnitt ein C-artig offenes Profil aufweist, worin das Sekundärteil (4,4a) und gegebenenfalls ein damit verbundener Schlitten (4) bewegbar aufgenommen sind.

4. Vorrichtung nach einem der vorangehenden Ansprüche, dadurch gekennzeichnet, daß die Führungsschiene (3) mit Aufnahmemitteln für die Leitungsstränge zur Bestromung des Primärteiles (10,10a) versehen ist.

5. Vorrichtung nach einem der vorangehenden Ansprüche, gekennzeichnet durch ein oder mehrere Befestigungsmittel (24,25;24a,25) zur Befestigung der Statoreinrichtung oder eines Teiles davon (10,10a) und der Führungsschiene (3) miteinander und/oder zum Anbringen eines oder mehrerer Kontaktierungselemente (26) an der Führungsschiene (3), wobei die Kontaktierungselemente (26) in, an oder auf den Befestigungsmitteln (24,25;24a,25) angeordnet und/oder ausgebildet und dem oder den Leitungssträngen (21) der Führungsschierle (3) zur Bildung einer elektrischen Verbindung zugeordnet sind.

6. Vorrichtung nach Anspruch 5, wobei die Statoreinrichtung (10,10a) eine oder mehrere, zu bestromende Wicklungen (27) aufweist, gekennzeichnet durch ein oder mehrere, Stator-Wicklungsein- und/oder -ausgänge (27a) abschließende Kontaktierungselemente (26), die in oder auf der Statoreinrichtung (10,10a) und/oder den Befestigungsmitteln angeordnet oder ausgebildet und bei Betätigung der Befestigungsmittel (24,25;24a,25) in Kontakt und/oder Eingriff mit den Leitungssträngen (21) der Führungsschiene (3) zur Erzeugung einer elektrischen Verbindung zu den Stator-Wicklungsein- und/oder -ausgängen (27a) bringbar sind.

7. Vorrichtung nach Anspruch 6, dadurch gekennzeichnet, daß die Befestigungsmittel (24,25) baulich mit der Statoreinrichtung (10,10a) integriert und/oder mit vorstehenden federnden Schnapphaken (25) zum Umfassen der Führungsschiene (3) ausgebildet sind.

8. Vorrichtung nach Anspruch 6 oder 7, dadurch gekennzeichnet, daß das Kontaktierungselement (26) mit einer Schneidklemme (26a) zum Durchscheren (26b) des Materials der Führungsschiene (3) bis zum Leitungsstrang (21) realisiert ist.

9. Vorrichtung nach einem der Ansprüche 5 bis 8, wobei die Führungsschiene (3) aus mehreren, in Reihe aneinander anschließenden Einzelabschnitten (3a,3b) zusammengesetzt ist, die zwischen sich im jeweiligen Anschlußbereich eine Stoßnaht oder -fuge (30) bilden, dadurch gekennzeichnet, daß beidseits der Stoßfuge (30) je ein separates Befestigungsmittel (24a,25) mit ein oder mehreren Kontaktierungselementen (26) angeordnet ist, und die Kontaktierungselemente (26) auf unterschiedlichen Seiten bezüglich der Stoßnaht (30) durch eine oder mehrere Überbrückungsleitungen (31) elektrisch verbunden sind.

10. Vorrichtung nach einem der vorangehenden Ansprüche, dadurch gekennzeichnet, dass der Primärteil (10,10a) und/oder Sekundärteil (4,4a) des Linearmotors (4,4a,N,S,10,10a,11) in einzelne Stator- beziehungsweise Läufersegmente (10a,4a) untergliedert ist, die über Gelenke gegeneinander dreidimensional beweglich aneinandergereiht sind.

11. Vorrichtung nach Anspruch 10, dadurch gekennzeichnet, daß die Gelenke als Kugel- und/oder Kreuzgelenke (33,34) und/oder mit elastischen Scharnierstiften (37) realisiert sind.

12. Vorrichtung nach einem der vorangehenden Ansprüche, dadurch gekennzeichnet, dass die Führungsschiene (3) in ihren Spuren (49,51;50,52) eine oder mehrere dadurch schaltbare Weichen (39) zur Richtungs- oder Spuränderung für das Sekundärteil (4,4a) mit Förderelementen aufweist, dass Abschnitte oder Segmente des Primärteiles oder sonstige Elektromagnetmittel (43;53a,53b,54a,54b) im Weichenbereich angeordnet, je einer der verzweigenden Weichenrichtungen oder -spuren (49,51;50,52) zugeordnet und zur Richtungsbestimmung betätigbar oder verstellbar sind.

13. Vorrichtung nach Anspruch 12, dadurch gekennzeichnet, daß das Sekundärteil (4;4a) mit Förderelementen mit den magnetischen Anziehungskräften der den verzweigenden Weichenrichtungen oder -spuren (49,51;50,52) zugeordneten Primärteil-Abschnitte oder -Segmente oder sonstigen Elektromagnetmittel (43;53a,53b,54a,54b) derart koppelbar geführt ist, daß das Sekundärteil (4,4a) je nach deren alternativer Betätigung in die entsprechende Weichenspur (49,51;50,52) gezogen wird.

14. Vorrichtung nach Anspruch 12, dadurch gekennzeichnet, daß die Weiche (39) ein oder mehrere, zur Richtungs- oder Spuränderung angeordnete Spurabschnitte oder -segmente (40a,40b) aufweist, die aus einer inaktiven und/oder wirkungslosen Grundstellung in die Spur- oder Führungsebene der Führungsschiene (3) mittels der Elektromagnetmittel (43) verstellbar sind, wobei Spurabschnitte oder -segmente (40a,40b) der Weiche (39) in richtungsbestimmenden Kontakt oder Eingriff mit dem mit Förderelementen verbundenen Sekundärteil (4,4a) kommen.

15. Vorrichtung nach einem der vorangehenden Ansprüche, dadurch gekennzeichnet, dass die Führungsschiene (3) zur Richtungs- oder Spuränderung für das mit Förderelementen verbundene Sekundärteil (4,4a) wenigstens eine schaltbare Weiche (39) aufweist, die in einzelne, teilweise richtungsändernd bewegliche Abschnitte oder Segmente (39a,39b,39c) untergliedert ist, wobei der oder die richtungsändernden Abschnitte oder Segmente (39a,39b,39c) der Weiche (39) einzeln oder gemeinsam quer oder schräg zur jeweiligen Weichenspur (49,51;50,52) und/oder den ortsfesten Weichenabschnitten (39a,39b,42) und -segmenten in einer Linearführung (48) verstellbar sind.

16. Vorrichtung nach Anspruch 15, dadurch gekennzeichnet, daß der Stellantrieb mit einem Linearantrieb realisiert ist.

17. Vorrichtung nach einem der vorangehenden Ansprüche, dadurch gekennzeichnet, dass die Führungsschiene (3) an ihren Randseiten mit je einer Gleitführung ausgebildet ist, die mit zueinander komplementären Eingriffselementen in oder auf der Führungsschiene (3) einerseits und dem Sekundärteil (4,4a) und/oder den Förderelementen andererseits realisiert ist.

18. Vorrichtung nach Anspruch 17, dadurch gekennzeichnet, daß die Eingriffselemente als gegenüberliegende, ineinanderrückbare und/oder verrastbare Vorsprünge (55), Aussparungen oder Vertiefungen (56) ausgebildet sind.

## Claims

1. An apparatus for conveying or feeding materials and packaged goods and also a paper web into a printing machine, having at least one feed element designed to engage with the material or packaged goods or with the paper web, a guide rail (3) in and/or along which the feed element or elements can move, and a drive means engaging the feed element so as to convey the material, the packaged goods or the paper web via the feed element into and/or through the machine, characterised in that the drive means is in the form of an electric linear motor (4,4a,N,S,10,10a,11), of which the secondary part or rotor device (4,4a) engages and/or carries the feed element or elements, and of which the primary part or stator device (10,10a) is mounted stationary on the guide rail (3), and the guide rail (3) comprises non-magnetic and non-conductive or electrically insulating material and has one or more electric lead lines (21) therein with which the stator device (10,10a) is coupled and/or connected for its energising.

2. An apparatus according to Claim 1, characterised in that the guide rail (3) is disposed at least partly in the air gap (19) between the stator device and the rotor device (4,4a,10,10a).

3. An apparatus according to Claim 1 or 2, characterised in that the guide rail (3) is of open C-type profile in cross-section, the secondary part (4,4a) and, optionally, a slide (4) connected thereto being movably accommodated therein.

4. An apparatus according to any one of the preceding Claims, characterised in that the guide rail (3) is provided with accommodating means for the lead lines for energising the primary part (10,10a).

5. An apparatus according to any one of the preceding Claims, characterised by one or more fastening means (24,25; 24a,25) for fastening the stator device or a part thereof (10,10a) and the guide rail (3) to one another and/or for attaching one or more contact elements (26) to the guide rail (3), wherein the contact elements (26) are arranged and/or formed in, at or on the fastening means (24,25;24a,25) and are associated with the lead line or lines (21) of the guide rail (3) to effect an electrical connection.

6. An apparatus according to Claim 5, wherein the stator device (10,10a) has one or more windings (27) to be energised, characterised by one or more contact elements (26) which terminate stator-winding inputs and/or outputs (27a) and which are arranged or formed in or on the stator device (10,10a) and/or the fastening means, and upon actuation of the fastening means (24,25;24a,25) can be brought into contact and/or engagement with the lead lines (21) of the guide rail (3) to provide an electrical connection with the stator-winding inputs and/or outputs (27a) .

7. An apparatus according to Claim 6, characterised in that the fastening means (24,25) are formed structurally integrated with the stator device (10,10a) and/or with projecting resilient snap hooks (25) for embracing the guide rail (3).

8. An apparatus according to Claim 6 or 7, characterised in that the contact element (26) is provided with a cutting terminal (26a) for shearing through (26b) the material of the guide rail (3) as far as the lead line (21).

9. An apparatus according to any one of Claims 5 to 8, wherein the guide rail (3) is composed of a plurality individual portions (3a,3b) following one another in series which in the respective connecting zone form a butt joint (30) to each other, characterised in that in each case a separate fastening means (24a,25) with one or more contact elements (26) is arranged on either side of the butt joint (30), and the contact elements (26) are electrically connected on different sides with respect to the butt joint (30) by one or more bypass leads (31).

10. An apparatus according to any one of the preceding Claims, characterised in that the primary part (10,10a) and/or the secondary part (4,4a) of the linear motor (4,4a,N,S,10,10a,11) is subdivided into respective individual stator and rotor segments (10a,4a) which are mounted side by side movably three-dimensionally with respect to one another via articulations.

11. An apparatus according to Claim 10, characterised in that the articulations are formed as ball and/or swivel joints (33,34) and/or with resilient hinge pins (37).

12. An apparatus according to any one of the preceding Claims, characterised in that in its tracks (49,51;50,52) the guide rail (3) has one or more switches (39) which can thereby be operated for changing the direction or track for the secondary part (4,4a) with feed elements, in that portions or segments of the primary part or other electromagnetic means (43;53a,53b,54a,54b) arranged in the switch region are associated with a respective one of the switch directions or tracks (49,51;50,52) to be branched and can be actuated or adjusted to determine the direction.

13. An apparatus according to Claim 12, characterised in that the secondary part (4;4a) is guided with feed elements having the magnetic forces of attraction of the primary portions or segments or other electromagnetic means (43;53a,53b,54a,54b) associated with the branching switch directions or tracks (49,51;50,52) so it can be coupled in such a way that the secondary part (4,4a) is pulled, depending on its alternative actuation, into the corresponding switch track (49,51;50,52).

14. An apparatus according to Claim 12, characterised in that the switch (39) has one or more track portions or segments (40a,40b) which are arranged for changing direction or track and which can be adjusted from an inactive and/or non-operative normal position into the track or guide plane of the guide rail (3) by the electromagnetic means (43), wherein track portions or segments (40a,40b) of the switch (39) come into direction-determining contact or engagement with the secondary part (4,4a) connecting the feed elements.

15. An apparatus according to any one of the preceding Claims, characterised in that the guide rail (3) has at least one shiftable switch (39) for changing direction or track for the secondary part (4,4a) connected with feed elements, which switch is subdivided into individual portions or sections (39a,39b,39c) partly movable for changing direction, wherein the direction-changing portion or portions, section or sections (39a,39b,39c) of the switch (39) are adjustable individually or together transversely or obliquely to the respective switch track (49,51;50,52) and/or the stationary switch portions (39a,39b,42) and segments in a linear guide (48).

16. An apparatus according to Claim 15, characterised in that the actuating mechanism is in the form of a linear drive.

17. An apparatus according to any one of the preceding Claims, characterised in that on its marginal sides the guide rail (3) is formed with a respective slideway which is provided with mutually complementary engagement elements in or on the guide rail (3), on the one hand, and with the secondary part (4,4a) and/or the feed elements, on the other hand.

18. An apparatus according to Claim 17, characterised in that the engagement elements are in the form of opposing projections (55), recesses or indentations (56) which can be engaged and/or located in one another.

## Revendications

1. Dispositif pour transporter et convoyer des substances et des matériaux en vrac ainsi qu'une bande de papier dans une machine d'impression, comportant au moins un élément de convoyage agencé de manière à venir en prise avec la substance, le matériau en vrac ou la bande de papier, un rail de guidage (3), dans et/ou le long duquel le ou les éléments de convoyage sont déplaçables, et un dispositif d'entraînement qui saisit l'élément de convoyage, pour entraîner la substance, le matériau en vrac ou la bande de papier au moyen de l'élément de convoyage dans et/ou à travers la machine, caractérisé en ce que le dispositif d'entraînement est réalisé avec un moteur électrique linéaire (4, 4a, N, S, 10, 10a, 11), dont la partie secondaire ou dispositif formant rotor (4, 4a) saisit et/ou porte les éléments de convoyage et dont la partie primaire ou dispositif formant stator (10, 10a) est monté de façon fixe sur le rail de guidage (3), et le rail de guidage (3) est formé par un matériau amagnétique et non conducteur ou électriquement isolant et contient un ou plusieurs faisceaux de conducteurs électriques (21), à l'aide desquels le dispositif formant stator (10, 10a) est accouplé et/ou relié pour son alimentation en courant.

2. Dispositif selon la revendication 1, caractérisé en ce que le rail de guidage (3) est disposé (4, 4a, 10, 10a) au moins en partie dans l'entrefer (19) entre le dispositif formant stator et le dispositif formant rotor.

3. Dispositif selon la revendication 1 ou 2, caractérisé en ce que le rail de guidage (3) possède en coupe transversale un profilé ouvert en forme de C, dans lequel la partie inférieure (4, 4a) et éventuellement un chariot (4) relié à cette partie secondaire, sont logés de manière à être déplaçables.

4. Dispositif selon l'une des revendications précédentes, caractérisé en ce que le rail de guidage (3) est équipé de moyens de logement pour les faisceaux de conducteurs pour l'alimentation en courant de la partie primaire (10, 10a).

5. Dispositif selon l'une des revendications précédentes, caractérisé par un ou plusieurs moyens de fixation (24, 25; 24a, 25) pour fixer le dispositif formant stator ou une partie de ce dispositif (10, 10a) et le rail de guidage entre eux et/ou pour monter un ou plusieurs éléments de contact (26) sur le rail de guidage (3), les éléments de contact (26) étant disposés et/ou formés sur les moyens de fixation (24, 25; 24a, 25) et étant associés au(x) faisceau(x) de conducteurs (21) du rail de guidage (3) pour former une liaison électrique.

6. Dispositif selon la revendication 5, dans lequel le dispositif formant stator (10, 10a) comporte un ou plusieurs enroulements (22) devant être alimentés en courant, caractérisé par un ou plusieurs éléments de contact (26), qui terminent des entrées et/ou des sorties (27a) d'enroulements statoriques et qui sont disposés ou formés dans ou sur le dispositif formant stator (10, 10a) et/ou les moyens de fixation et, lors de l'actionnement des moyens de fixation (24, 25; 24a, 25), peuvent être placés en contact et/ou peuvent être amenés à engrener avec les faisceaux de conducteur (21) du rail de guidage (3) pour établir une liaison électrique avec les entrées et/ou les sorties (27a) d'enroulements statoriques.

7. Dispositif selon la revendication 6, caractérisé en ce que les moyens de fixation (24, 25) sont intégrés, du point de vue construction, au dispositif formant stator (10, 10a) et/ou sont réalisés avec des crochets saillants élastiques d'encliquetage (25) servant à entourer le rail de guidage (3).

8. Dispositif selon la revendication 6 ou 7, caractérisé en ce que l'élément de contact (26) est réalisé avec une borne à découpage (26a) servant à cisailler (26b) le matériau du rail de guidage (3) jusqu'au faisceau de conducteurs (21).

9. Dispositif selon l'une des revendications 5 à 8, dans lequel le rail de guidage (3) est formé par la réunion de plusieurs parties individuelles (3a, 3b), qui se raccordent entre elles en série et forment entre elles, dans la zone respective de raccordement, un cordon ou joint d'aboutement (30), caractérisé en ce qu'un moyen séparé de fixation (24a, 25) comportant un ou plusieurs éléments de contact (26) est disposé respectivement des deux côtés du joint d'aboutement (30) et que les éléments de contact (26) sont reliés électriquement sur des côtés différents par rapport au joint d'aboutement (30), par un ou plusieurs conducteurs de pontage (31).

10. Dispositif selon l'une des revendications précédentes, caractérisé en ce que la partie primaire (10, 10a) et/ou la partie secondaire (4, 4a) du moteur linéaire (4, 4a, M, S, 10, 10a, 11) est subdivisée en segments individuels (10a, 4a) du stator ou du rotor, qui sont raccordés les uns aux autres de manière à être déplaçables d'une manière tridimensionnelle les uns par rapport aux autres au moyen d'articulations.

11. Dispositif selon la revendication 10, caractérisé en ce que les articulations sont réalisées sous la forme d'articulations sphériques et/ou de joints universels (33, 34) et/ou à l'aide d'axes élastiques de charnières (37).

12. Dispositif selon l'une des revendications précédentes, caractérisé en ce que le rail de guidage (3) comporte, dans ses pistes (49, 51; 50, 52), un ou plusieurs aiguillages (39) qui sont destinés à modifier la direction ou la piste pour la partie secondaire (4, 4a) comportant des éléments de convoyage et peuvent être commutés par le fait que des sections ou des segments de la partie primaire ou d'autres moyens formant électroaimants (43; 53a, 53b, 54a, 54b) sont disposés au niveau des aiguillages, sont associés respectivement à l'une des directions ou pistes ramifiées (49, 51; 50, 52) des aiguillages et peuvent être actionnés ou réglés pour la détermination de la direction.

13. Dispositif selon la revendication 12, caractérisé en ce que la partie secondaire (4, 4a) équipée d'éléments de convoyage est guidée de manière à pouvoir être couplée aux forces d'attraction magnétique des sections ou segments de la partie primaire, associés aux directions ou pistes ramifiées (49, 51; 50, 52) des aiguillages, ou d'autres moyens formant électroaimants (43; 53a, 53b, 54a, 54b) de telle sorte que la partie secondaire (4, 4a) est attirée dans la piste d'aiguillage correspondantes (49, 51; 50, 52) en fonction de leur autre actionnement.

14. Dispositif selon la revendication 12, caractérisé en ce que l'aiguillage (39) comporte une ou plusieurs sections ou segments de piste (40a, 40b), qui sont disposés de manière à modifier la direction ou la piste et sont déplaçables à l'aide des moyens formant électroaimants (43) depuis une position de base inactive et/ou sans action, pour être amenés dans le plan de piste ou plan de guidage du rail de guidage (3), les sections ou segments de pistes (40a, 40b) de l'aiguillage (39) établissant un contact ou mettant en prise, d'une manière déterminant la direction, avec la partie secondaire (4, 4a) reliée à des éléments de convoyage.

15. Dispositif selon l'une des revendications précédentes, caractérisé en ce que le rail de guidage (3) comporte pour la modification de la direction ou de la piste pour la partie secondaire (4, 4a) reliée à des éléments de convoyage, au moins un aiguillage commutable (39), qui est subdivisé en sections ou segments individuels (39a, 39b, 39c), qui sont mobiles en partie en modifiant la direction, la ou les sections ou segments (39a, 39b, 39c) de l'aiguillage (39) qui modifient la direction, étant réglables individuellement ou en commun transversalement ou obliquement par rapport à la piste respective d'aiguillage (49, 51; 50, 52) et/ou aux sections fixes d'aiguillage (39a, 39b, 49) et aux segments d'aiguillage fixes dans un guide linéaire (48).

16. Dispositif selon la revendication 15, caractérisé en ce que le dispositif d'entraînement de réglage est réalisé avec un système d'entraînement linéaire.

17. Dispositif selon l'une des revendications précédentes, caractérisé en ce que le rail de guidage (3) est réalisé, au niveau de ses bords avec respectivement un guide formant glissière, qui est réalisé d'une part avec des éléments d'engagement réciproquement complémentaires situés dans ou sur le rail de guidage (3) et d'autre part avec la partie secondaire (4, 4a) et/ou les éléments de convoyage.

18. Dispositif selon la revendication 17, caractérisé en ce que les éléments d'engrènement sont agencés sous la forme d'éléments saillants (55), d'évidements ou de renfoncements (56), qui sont situés en vis-à-vis, sont emboîtables les uns dans les autres et/ou sont encliquetables.
